# EUROPEAN PATENT SPECIFICATION

(11) **EP 4 247 631 B1**
(45) Date of publication and mention of the grant of the patent: **04.09.2024**
(21) Application number: 21810618.5
(22) Date of filing: 17.11.2021
(51) Int. Cl.: B32B 5/02, B32B 7/06, B32B 7/12, B32B 27/10, B32B 27/28, B32B 27/30, B32B 27/32, B32B 27/36, B32B 29/00, B32B 29/06

(54) **CELLULOSE BASED MULTILAYER PACKAGING WITH BARRIER PROPERTIES FOR 3D-OBJECTS**
MEHRSCHICHTIGE VERPACKUNG AUF CELLULOSEBASIS MIT BARRIEREEIGENSCHAFTEN FÜR 3D-OBJEKTE
EMBALLAGE MULTICOUCHE À BASE DE CELLULOSE POSSÉDANT DES PROPRIÉTÉS DE BARRIÈRE POUR OBJETS 3D

(30) Priority: 20.11.2020 EP 20208960
(43) Date of publication of application: 27.09.2023
(73) Proprietor: Société des Produits Nestlé S.A., 1800 Vevey (CH)
(72) Inventor: BRAS, Julien, 38410 St Martin d'uriage (FR); CHARDOT, Julia, 78530 Buc (FR); MISSOUM, Karim, 1010 Lausanne (CH); MOUREN, Agathe, 83500 La Seyne Sur Mer (FR)
(74) Representative: Chatelan, Florence Anne
(86) International application number: PCT/EP2021/081979
(87) International publication number: WO 2022/106465

(56) References cited:
- EP-A1- 3 266 608
- WO-A1-2009/014483
- WO-A2-2018/050788

## Description

The present invention relates generally to the field of food packaging, in particular food packaging. One embodiment of the present invention relates to a three-dimensional cellulose-based food packaging with excellent barrier properties. For example, the present invention relates to a cellulose-based, multilayer, three-dimensional food packaging comprising a plastic layer, a barrier paper layer and a moulded cellulose layer. This cellulose-based, multilayer, three-dimensional food packaging has an oxygen transmission rate (OTR) of less than 30 cc/m²/d (23°C, 50%RH) and a water vapor transmission rate (WVTR) of less than 20 g/m²/d (38°C, 90 %RH).

Packaging of manufactured food products is a vital part of the food industry today as it ensures food safety, preserves food quality and plays an important role in production processes, in brand communication and in digitalization. Indeed, several studies show that for a large part of consumers the packaging of a product is one key aspect that drives the purchase decision.

Plastic packaging is used frequently in the economy and in people's daily lives. It has multiple advantages, such as its 3D shape flexibility, its light weight and its barrier properties. Such a weight reduction contributes to fuel saving and CO₂ reduction during transport, for example. Its barrier properties help to reduce food waste due a positive effect on increasing shelf life. The barrier properties also help to secure food safety.

However, according to the European strategy for plastics in a circular economy, recently published by the European Commission, around 25.8 million tons of plastic waste are generated in Europe every year with less than 30% of such waste being collected for recycling and between 150 000 to 500 000 tons of plastic waste entering the oceans every year.

One of the main problems associated with packaging in general is the generation of packaging waste. According to Eurostat in 2017, 172.6 kg of packaging waste was generated per inhabitant in the EU.

The industry addresses this issue by embracing the circular economy. In line with this, the European Commission has recently communicated a new Circular Economy Action Plan (COMMUNICATION FROM THE COMMISSION TO THE EUROPEAN PARLIAMENT, THE COUNCIL, THE EUROPEAN ECONOMIC AND SOCIAL COMMITTEE AND THE COMMITTEE OF THE REGIONSA new Circular Economy Action Plan For a cleaner and more competitive Europe, Brussels, 11.3.2020). Accordingly, the EU needs to accelerate the transition towards a regenerative growth model that gives back to the planet more than it takes, advance towards keeping its resource consumption within planetary boundaries, and therefore strive to reduce its consumption footprint and double its circular material use rate in the coming decade.

To ensure that plastic waste is reduced, significant efforts are made in the industry and in commerce. Replacing plastics with paper or fibre based solutions in food packaging is one way forward, but not an easy task. A change in packaging material must not compromise consumer safety. The packaging must serve to protect the food, but must also be robust enough to be handled by machines during the production process, and must allow that the food product is presented effectively.

One step towards meeting the challenges mentioned above is to use cellulose-based packaging material. However, cellulose based packaging materials are typically porous (i.e. they have an insufficient gas barrier) and absorb liquids, such as water or oil for example.

For example, in three-dimensional food packaging, one way to address this problem is to use a moulded cellulose layer laminated with a plastic layer. Such multi-layer cellulose-based materials, however, often have a lower cellulose content, may - consequently - be more difficult to recycle and may still have insufficient barrier properties for certain food applications. The necessity to use multiple layers, however, reduces the cellulose content of the packaging material. The recycling of such multilayer packaging materials is - for example - reviewed in Recycling 2018,3, 1-26.

An example of a three dimensional food packaging is given in WO 2009/014483 A1, where a barrier moulded cellulose layer is present to increase the recycling properties.

Consequently, there is a need in the art for a cellulose-based three-dimensional packaging material that is easy to recycle and that has sufficient barrier properties so that it can be used for food applications.

Any reference to prior art documents in this specification is not to be considered an admission that such prior art is widely known or forms part of the common general knowledge in the field.

The objective of the present invention was to enrich or improve the state of the art and in particular to provide a cellulose-based three-dimensional packaging material that is easy to recycle and that has sufficient oxygen, water nitrogen, and/or carbon dioxide barrier properties so that it can be used for food applications, or to at least provide a useful alternative to solutions existing in the art.

The inventors were surprised to see that the objective of the present invention could be achieved by the subject matter of the independent claims. The dependent claims further develop the idea of the present invention.

Accordingly, the present invention provides a cellulose-based, multilayer, three-dimensional food packaging comprising a bioplastic layer, a barrier paper layer and a moulded cellulose layer. Notably, the cellulose-based, multilayer, three-dimensional food packaging has an oxygen transmission rate (OTR) of less than 30 cc/m²/d (23°C, 50%RH) and a water vapor transmission rate (WVTR) of less than 20 g/m²/d (38°C, 90 %RH).

The present invention further provides a method to manufacture such a cellulose-based, multilayer, three-dimensional food packaging.

As used in this specification, the words "comprises", "comprising", and similar words, are not to be interpreted in an exclusive or exhaustive sense. In other words, they are intended to mean "including, but not limited to".

The present inventors have shown that by introducing a paper barrier layer in between a molded cellulose and a bioplastic layer it was possible to manufacture a cellulose-based three-dimensional packaging with sufficiently high oxygen and water vapor barrier properties, so that the packaging can be used for packaging food.

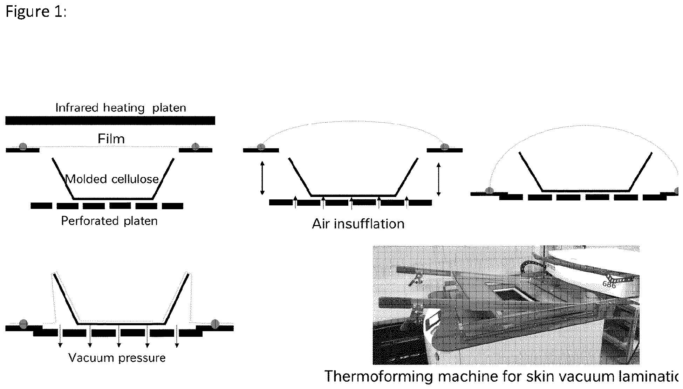

Figure 1 shows the skin vacuum lamination of bioplastics onto a molded cellulose. This process is used in this invention with putting an intermediate layer of barrier paper between the molded cellulose and the bioplastic film.

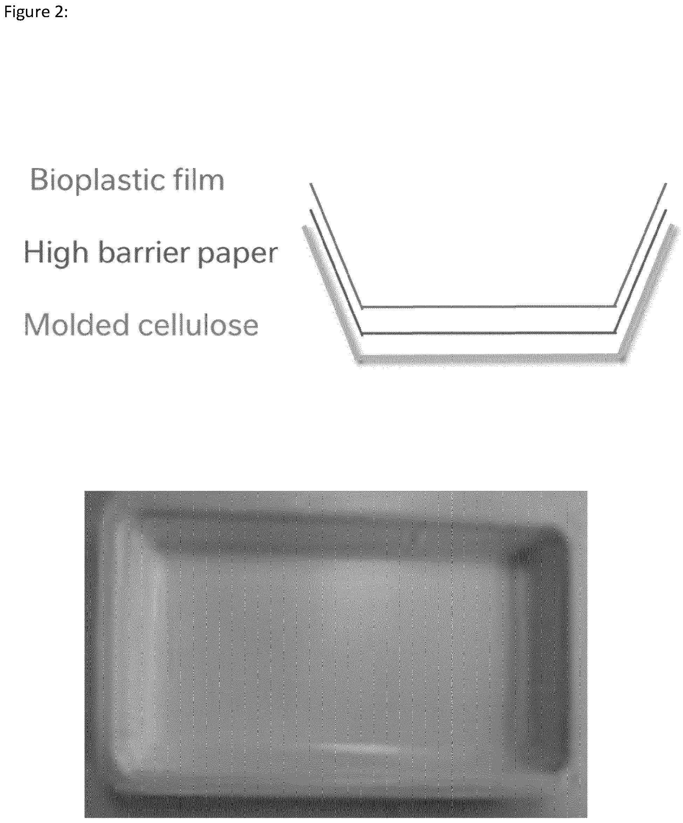

Figure 2 shows the multilayer strategy proposed in this patent and one example of a final product.

Consequently, the present invention relates in part to a cellulose-based, multilayer, three-dimensional food packaging comprising a bioplastic layer, a barrier paper layer and a moulded cellulose layer.

For the purpose of the present invention, a packaging shall be considered multilayer if it comprises at least three layers.

The term "food" shall comprise for the purpose of the present invention petfood and/or food as defined by Codex Alimentarius. Codex Alimentarius defines the term "food" as any substance, whether processed, semi-processed or raw, which is intended for human consumption, and includes drink, chewing gum and any substance which has been used in the manufacture, preparation or treatment of "food" but does not include cosmetics or tobacco or substances used only as drugs.

A packaging shall be considered as cellulose-based if it contains more than 50 weight%, more than 60 weight-%, more than 70 weight-%, more than 80 weight-%, more than 90 weight-%, or more than more than 95 weight-% cellulose.

For the purpose of the present invention, a packaging shall be considered as three-dimensional if one dimension is not significantly smaller than the other two dimensions. For example, in a three dimensional packaging one dimension may have a length of not less than about 5% of the other two dimensions, not less than about 5% of the other two dimensions, not less than about 10% of the other two dimensions, not less than about 15% of the other two dimensions, not less than about 20% of the other two dimensions, not less than about 25% of the other two dimensions, not less than about 30% of the other two dimensions, not less than about 35% of the other two dimensions, or not less than about 40% of the other two dimensions.

In accordance with the present invention, the packaging of the present invention has barrier properties that are sufficiently high so that the packaging can be used for packing sensitive food.

3D cellulose-based packaging materials usually have rough surfaces, even much rougher than paper. As a result, the use of large amounts of surface coating material is usually necessary in order to achieve acceptable barrier properties. This coating on 3D packaging is also more complicated than coating on 2D paper and spray technology is classically used favoring a high amount of coating deposited. This may lead to a high plastic content to bring the required gas barrier properties, which in turn may lead to problems during recycling. By introducing a barrier paper between the moulded cellulose layer and the bioplastic layer, the present inventors avoid the use of high amounts of coating on molded pulp, as less coating is needed to coat high barrier paper while delivering the required barrier properties. This results in the usage of at least 50 %, at least 60%, at least 70%, at least 80%, or even at least 90% less coating material compared to spray coating moulded cellulose objects without barrier paper layer. In addition, the barrier properties of the packaging are improved. Hence, the cellulose-based, multilayer, three-dimensional food packaging of the present invention may have an oxygen transmission rate (OTR) of less than 30 cc/m²/d (23°C, 50%RH) and a water vapor transmission rate (WVTR) of less than 20 g/m²/d (38°C, 90 %RH).

For example, the cellulose-based, multilayer, three-dimensional food packaging of the present invention may have an oxygen transmission rate (OTR) of less than 30 cc/m²/d (23°C, 50%RH), of less than 20 cc/m²/d (23°C, 50%RH), or of less than 10 cc/m²/d (23°C, 50%RH). The cellulose-based, multilayer, three-dimensional food packaging of the present invention may have a water vapor transmission rate (WVTR) of less than 20 g/m²/d (38°C, 90 %RH), a water vapor transmission rate (WVTR) of less than 15 g/m²/d (38°C, 90 %RH), or a water vapor transmission rate (WVTR) of less than 10 g/m²/d (38°C, 90 %RH).

Having the barrier paper layer in between the moulded cellulose layer and the bioplastic layer has - as discussed - the advantage that less plastic coating is needed for coating as the barrier paper has a smoother surface than the moulded cellulose layer. Hence, the cellulose-based, multilayer, three-dimensional food packaging of the present invention may comprise from the inside to the outside a bioplastic layer, a barrier paper layer and a moulded cellulose layer. The inside of the packaging is the side of the packaging that is closest to the food or pet food. In one embodiment of the present invention, the cellulose-based, multilayer, three-dimensional food packaging of the present invention may consist of from the inside to the outside a bioplastic layer, a barrier paper layer and a moulded cellulose layer.

The plastic layer can be petrobased, biobased, biodegradable or not biodegradable. For example, the petrobased non biodegradable polymer layer may be selected from the group consisting of polyolefins (PE, PP), polyesters (PET, PEF) and polystyrene (PS). Bioplastic refers to plastic made from plant or other biological material instead of petroleum. This has the advantage that bioplastic is made from renewable resources. While for the purpose of the present invention any bioplastic may be used, the inventors have obtained very good results with biodegradable polymers. Using biodegradable polymers as bioplastic has the advantage that the biodegradable polymers will be biodegraded with time. Hence, in one embodiment of the present invention, the bioplastic layer may be a biodegradable polymer layer. Further, for example, the biodegradable polymer layer may be selected from the group consisting of polyhydroxyalkanoate (PHA), poly lactic acid (PLA), polytetramethylene succinate (PBS), poly(glycolic acid) PGA or combinations thereof. It is also possible to use biodegradable polymers made from fossil sources such as, for example, polybutylene adipate terephthalate (PBAT).

Accordingly, in the packaging of the present invention the biodegradable polymer layer may have a thickness in the range of 30 to 250 µm, 30 to 200 µm, or 30 to 100 µm.

The barrier paper layer may be selected from the group consisting of dispersion coated paper, extrusion coated paper, or thin organic layer paper, or combinations thereof. For example, the present inventors have used successfully polyvinylidene chloride (PVDC) coated paper or metallized paper.

The inventors have obtained very good results, when the barrier paper layer used in the packaging of the present invention had a basis weight in the range of 15 to 120 g/m², in the range of 30 to 100 g/m², or in the range of 50 to 80 g/m².

Cellulose-based, food packaging layers may be moulded cellulose-based objects, for example moulded cellulose layer. Such three-dimensional moulded cellulose layers are usually prepared from cellulose-based pulps, which are then thermoformed into cellulose-based objects. For example, the cellulose based pulps may contain different types of cellulose pulps. Hence, the three-dimensional moulded cellulose layers may comprise comprises cellulose pulp selected from the group consisting of mechanical pulp, recycled paper pulp, bagasse pulp, annual plant pulp, virgin cellulose pulp, refined cellulose pulp, or a combination thereof. The three-dimensional moulded cellulose layers may also consist of cellulose pulp selected from the group consisting of mechanical pulp, recycled paper pulp, bagasse pulp, annual plant pulp, virgin cellulose pulp, refined cellulose pulp, or a combination thereof.

The inventors have produced a very good prototype using kraft bleached cellulose. Hence, the three-dimensional moulded cellulose layer in accordance with the present invention may comprise or consist of kraft bleached cellulose.

The three-dimensional moulded cellulose layers may also contain a sizing agent. Sizing agents are well-known in the art. Alkylketene dimer (AKD) and alkenyl succinic anhydride (ASA) are typically used as sizing agents. The inventors have obtained particularly good results when alkylketene dimer (AKD) was used as sizing agent. Hence, the cellulose-based object in accordance with the present invention may further comprise AKD.

Hence, in one embodiment of the present invention, the moulded cellulose layer may comprise at least 75 weight-%, at least 85 weight-%, at least 95 weight-%, or at least 99 weight-% cellulose. In one embodiment the moulded cellulose layer may consist of cellulose.

For example, in the three-dimensional food packaging in accordance with the present invention, the moulded cellulose layer may be made with material selected from the group consisting of mechanical pulp, recycled paper pulp, bagasse pulp, annual plant pulp, virgin cellulose pulp, refined cellulose pulp, or combinations thereof and/or may have a basis weight in the range of 100-800 g/m², in the range of 200-700 g/m², or in the range of 300-600 g/m².

In the packaging of the present invention the moulded cellulose layer may be prepared by thermoforming the moulded cellulose into the desired three-dimensional shape. Thermoforming pulp-based products is well-known in the art and, for example, described in Packaging Technology and Science, volume 32, issue1, January 2019, pages 7-22.

The cellulose-based, multilayer, three-dimensional food packaging in accordance with the present invention may be manufactured by any method known in the art. However, the inventors were able to produce such packaging very effectively with a skin vacuum lamination process. Hence, in one embodiment of the present invention, the cellulose-based, multilayer, three-dimensional food packaging is manufactured by a skin vacuum lamination process. The skin vacuum lamination process is well-known in the art, and for example described in EP2082965A1. Accordingly, for the purpose of the present invention a barrier paper may be attached to the inner surface of the three-dimensional moulded cellulose layer. This can be achieved by lamination or by skin vacuum lamination, for example. For skin vacuum lamination the three-dimensional moulded cellulose layer is placed on a support member which allows the application of a vacuum. The bioplastic and the barrier paper is provided in a closed chamber on top of the moulded cellulose layer and a vacuum is applied which attaches the barrier paper and the bioplastic to the surface of the three-dimensional moulded cellulose layer. The barrier paper may be also laminated onto the three-dimensional moulded cellulose with an adhesive. In a closed chamber the bioplastic layer is then provided on top of the barrier paper laminated onto the three-dimensional moulded cellulose layer coated with an adhesive and a vacuum is applied which attaches the bioplastic layer to the surface of the barrier paper.

Optionally, a product may be added to an area of the three-dimensional moulded cellulose layer laminated with barrier paper that is free of adhesive. The bioplastic layer may then be applied on top of the packaging by vacuum skin lamination, so that the bioplastic layer tightly encloses the product and the bioplastic layer is laminated to the top of the barrier paper layer, where there is no product in between barrier paper layer and bioplastic layer.

In one embodiment of the present invention, the bioplastic layer can be peeled off the multilayer packaging prior to recycling. This has the advantage that the bioplastic can be recycled separately and does not enter the paper recycling stream.

The cellulose-based, multilayer, three-dimensional food packaging in accordance with the present invention may be recyclable with the paper stream. The relatively small amounts of bioplastics can be tolerated in the paper recycling stream as the process of paper recycling most often involves breaking down the paper into strands of cellulose, often referred to as pulp or slurry, which is then strained through screens. At this stage, any plastic from multilayer cellulose-based materials is removed.

In one embodiment of the packaging of the present invention, the cellulose-based, multilayer, three-dimensional food packaging is biodegradable and/or compostable. Biodegradable materials can be decomposed by the action of living organisms, usually microbes, into water, carbon dioxide, and biomass. According to the European Commission, for example, biodegradability is the capability of being degraded by biological activity, Pure Applied Chemistry 84 (2), pp. 377-410. The capability of the compostable material to be converted into CO₂ under the action of micro-organisms can be measured with a laboratory standard test method: the EN 14046 (also published as ISO 14855: biodegradability under controlled composting conditions). In order to show complete biodegradability, a biodegradation level of at least 90% must be reached in less than 6 months.

The cellulose-based, multilayer, three-dimensional food packaging may be packaging selected from the group consisting of primary packaging, secondary packaging and tertiary packaging. A primary packaging for a food product may be a packaging for a food product that is in direct contact with the actual food product. A secondary packaging for a food product may be a packaging for a food product that helps secure one or more food products contained in a primary packaging. A secondary packaging is typically used when multiple food products are provided to consumers in a single container. A tertiary packaging for a food product may be a packaging for a food product that helps secure one or more food products contained in a primary packaging and/or in a primary and secondary packaging during transport.

The packaging may be any type of packaging. The inventors propose, in particular, that the packaging may be selected from the group consisting of cups, bottles, trays, capsules, straws, spoons, tips and lids. In a preferred embodiment the cellulose-based, multilayer, three-dimensional food packaging in accordance with the present invention is a food tray, for example, a food tray for frozen food.

The present invention further relates to a method of manufacturing a cellulose-based, multilayer, three-dimensional food packaging in accordance with the present invention comprising the steps of
- providing a moulded cellulose layer in a vacuum lamination device with a perforated surface underneath the moulded cellulose layer and a heating element on top of the moulded cellulose layer,
- providing a barrier paper layer on top of the moulded cellulose layer and underneath the heating element,
- providing a bioplastic layer on top of the barrier paper layer and underneath the heating element, and
- applying heat from above and a vacuum from underneath through the perforated surface to form the cellulose-based, multilayer, three-dimensional food packaging.

This process has the advantage that the barrier paper layer and the bioplastic layer can be laminated to the moulded cellulose layer in one step. Adhesives may be used to assist in the lamination and eventual delamination. This process of the present invention may be carried out, for example, in a skin vacuum lamination device. Such devices are commercially available from specialist suppliers.

The heating may be carried out by any heat source. The inventors recommend the use of an infrared heating element as heat source.

The temperature to be used will depend largely on the nature of the bioplastic and/or adhesive, if present, is used. In general, lower temperatures have the advantage that energy can be saved in the manufacturing process.

For example, the heating may be carried out at a temperature in the range of about 100-250°C, of about 100°C - 200°C, or of about 100 - 170°C.

The temperature to be used will also depend on the time of the lamination process. In general, shorter times allow for faster processing, but typically require higher temperatures. For example, the lamination may be carried out during a time period in the range of about 10 - 60 s, for example in the range of about 20 - 40 s.

Those skilled in the art will understand that they can freely combine all features of the present invention disclosed herein. In particular, features described for the product of the present invention may be combined with the use of the present invention and vice versa. Further, features described for different embodiments of the present invention may be combined.

Although the invention has been described by way of example, it should be appreciated that variations and modifications may be made without departing from the scope of the invention as defined in the claims.

Furthermore, where known equivalents exist to specific features, such equivalents are incorporated as if specifically referred in this specification. Further advantages and features of the present invention are apparent from the figures and non-limiting examples.

### Examples:

### Materials:

The molded cellulose tray is made of bleached kraft pulp after refining and supplied by a commercial partner.

Two barrier papers were tested: BarPap1 is a metallized paper of about 60gsm developed for its barrier properties, BarPap2 is a PVDC coated paper used in food packaging industry of about 70g/m².

The bioplastic is an Ecovio grade (BASF) with a thickness of 50 µm provided by a converter and obtained by extrusion casting.

### Methods:

The molded cellulose products were laminated with skin vacuum lamination process. The used machine was the vacuum forming machine 686 from Formtech. The machine had 6 heating zones, and the power level could be set from 0% to 100%. The maximum power was 300W for outer platen and 250W for inner ones. The heating time was about 5s. Molded cellulose materials have been preheated and the temperature of the film was recorded with an infrared thermometer just before vacuum application.

The water vapor transmission rate (WVTR) was measured following ISO 2528 used for flat packaging material. The sample was cut to obtain a flat disc of 90mm diameter. Approximately 20g of desiccant (dried silica gel) was placed into an aluminum clean dish. The cut sample was placed on the dish with the barrier face upwards. The dish was placed onto the aluminum device. Molten wax has been poured into the annular cavity between the cover template and the rim of the dish and the wax has been left to solidify. The exposed material surface of a sealed sample was 50cm². After drying, the sample was weighed before being placed into climate chamber at 23°C and 85% relative humidity.

The oxygen transmission rate was measured following the standard DIN 53338-5 with an adapted fluorescent method.

### Results:

The results are summarized in the table below

| | **Molded pulp** | **Molded pulp / Bioplastics** | **Molded pulp / BarPap1/ Bioplastics** | **Molded pulp / BarPap2/ Bioplastics** |
|---|---|---|---|---|
| **OTR cc/m²/d (23°C, 50% RH)** | 3000 | 620 | 6 | 15 |
| **WVTR g/m²/d (23°C, 85% RH)** | 1000 | 30 | 0,298 | 0,149 |

This table shows the positive impact on the gas barrier that is achieved by adding the interlayer of a barrier paper in between the molded pulp and the bioplastic.

## Claims

1. Cellulose-based, multilayer, three-dimensional food packaging comprising a plastic layer, a barrier paper layer and a moulded cellulose layer, wherein the cellulose-based, multilayer, three-dimensional food packaging has an oxygen transmission rate (OTR) of less than 30 cc/m²/d (23°C, 50%RH) with the method DIN 53338-5 and a water vapor transmission rate (WVTR) of less than 20 g/m²/d (38°C, 90 %RH) with the method ISO 2528

2. Cellulose-based, multilayer, three-dimensional food packaging in accordance with claim 1, wherein the cellulose-based, multilayer, three-dimensional food packaging comprises from the inside to the outside a plastic layer, a barrier paper layer and a moulded cellulose layer.

3. Cellulose-based, multilayer, three-dimensional food packaging in accordance with one of the preceding claims, wherein the plastic layer is selected from the group consisting of biodegradable polymers, for example, PHA, PLA, PBAT, PBS, PGA or combinations thereof and has a thickness in the range of 30 to 250 µm.

4. Cellulose-based, multilayer, three-dimensional food packaging in accordance with one of the preceding claims, wherein the barrier paper layer is selected from the group consisting of dispersion coated paper, extrusion coated paper, or thin organic layer paper, or combinations thereof and has a basis weight in the range of 15 to 120 gsm.

5. Cellulose-based, multilayer, three-dimensional food packaging in accordance with one of the preceding claims, wherein the moulded cellulose layer is made with material selected from the group consisting of, mechanical pulp, recycled paper pulp, bagasse pulp, annual plant pulp, virgin cellulose pulp, refined cellulose pulp, or combinations thereof and has a basis weight in the range of 100-800 gsm.

6. Cellulose-based, multilayer, three-dimensional food packaging in accordance with one of the preceding claims, wherein the moulded cellulose layer is prepared by thermoforming the moulded cellulose into the desired three-dimensional shape.

7. Cellulose-based, multilayer, three-dimensional food packaging in accordance with one of the preceding claims, wherein the cellulose-based, multilayer, three-dimensional food packaging is manufactured by a skin vacuum lamination process.

8. Cellulose-based, multilayer, three-dimensional food packaging in accordance with one of the preceding claims, wherein the cellulose-based, multilayer, three-dimensional food packaging is recyclable with the paper stream.

9. Cellulose-based, multilayer, three-dimensional food packaging in accordance with one of the preceding claims, wherein the cellulose-based, multilayer, three-dimensional food packaging is biodegradable.

10. Cellulose-based, multilayer, three-dimensional food packaging in accordance with one of the preceding claims, wherein the packaging is selected from the group consisting of primary packaging, secondary packaging and tertiary packaging.

11. Cellulose-based, multilayer, three-dimensional food packaging in accordance with one of the preceding claims, wherein the packaging is selected from the group consisting of cups, bottles, trays, capsules, spoon, tips and lids.

12. Cellulose-based, multilayer, three-dimensional food packaging in accordance with one of the preceding claims, wherein the cellulose-based, multilayer, three-dimensional food packaging is a food tray, for example, a food tray for frozen food.

13. Method of manufacturing a cellulose-based, multilayer, three-dimensional food packaging in accordance with one of the preceding claims comprising the steps of
- providing a moulded cellulose layer in a vacuum lamination device with a perforated surface underneath the moulded cellulose layer and a heating element on top of the moulded cellulose layer,
- providing a barrier paper layer on top of the moulded cellulose layer and underneath the heating element,
- providing a bioplastic layer on top of the barrier paper layer and underneath the heating element, and
- applying heat from above and a vacuum from underneath through the perforated surface to form the cellulose-based, multilayer, three-dimensional food packaging.

14. Method in accordance with claim 13, wherein the heating is carried out with an infrared heating element at a temperature in the range of about 100-250°C.

15. Method in accordance with claim 13 or 14, wherein the lamination is carried out during a time period in the range of about 10 - 60 s, for example in the range of about 20 - 40 s.

## Patentansprüche

1. Zellulosebasierte, mehrschichtige, dreidimensionale Lebensmittelverpackung, umfassend eine Kunststoffschicht, eine Barrierepapierschicht und eine geformte Zelluloseschicht, wobei die zellulosebasierte, mehrschichtige, dreidimensionale Lebensmittelverpackung eine Sauerstoffdurchlässigkeitsrate (OTR) von weniger als 30 cc/m²/d (23 °C, 50 % RH) nach der Methode DIN 53338-5 und eine Wasserdampfdurchlässigkeitsrate (WVTR) von weniger als 20 g/m²/d (38 °C, 90 % RH) nach der Methode ISO 2528 aufweist.

2. Zellulosebasierte, mehrschichtige, dreidimensionale Lebensmittelverpackung nach Anspruch 1, wobei die zellulosebasierte, mehrschichtige, dreidimensionale Lebensmittelverpackung von innen nach außen eine Kunststoffschicht, eine Barrierepapierschicht und eine geformte Zelluloseschicht umfasst.

3. Zellulosebasierte, mehrschichtige, dreidimensionale Lebensmittelverpackung nach einem der vorstehenden Ansprüche, wobei die Kunststoffschicht ausgewählt ist aus der Gruppe bestehend aus biologisch abbaubaren Polymeren, beispielsweise PHA, PLA, PBAT, PBS, PGA oder Kombinationen davon und eine Dicke in dem Bereich von 30 bis 250 µm aufweist.

4. Zellulosebasierte, mehrschichtige, dreidimensionale Lebensmittelverpackung nach einem der vorstehenden Ansprüche, wobei die Barrierepapierschicht ausgewählt ist aus der Gruppe bestehend aus dispersionsbeschichtetem Papier, extrusionsbeschichtetem Papier oder dünnem organischem Schichtpapier oder Kombinationen davon und ein Flächengewicht in dem Bereich von 15 bis 120 g/m² aufweist.

5. Zellulosebasierte, mehrschichtige, dreidimensionale Lebensmittelverpackung nach einem der vorstehenden Ansprüche, wobei die geformte Zelluloseschicht aus einem Material hergestellt ist, das ausgewählt ist aus der Gruppe bestehend aus Holzstoff, Recyclingpapierzellstoff, Bagassezellstoff, Zellstoff aus Einjahrespflanzen, Zellstoff aus Frischzellstoff, raffiniertem Zellstoff oder Kombinationen davon und ein Basisgewicht in dem Bereich von 100-800 g/m² aufweist.

6. Zellulosebasierte, mehrschichtige, dreidimensionale Lebensmittelverpackung nach einem der vorstehenden Ansprüche, wobei die geformte Zelluloseschicht durch Thermoformen der geformten Zellulose in die gewünschte dreidimensionale Form hergestellt wird.

7. Zellulosebasierte, mehrschichtige, dreidimensionale Lebensmittelverpackung nach einem der vorstehenden Ansprüche, wobei die zellulosebasierte, mehrschichtige, dreidimensionale Lebensmittelverpackung durch ein Skin-Vakuum-Laminierungsverfahren hergestellt ist.

8. Zellulosebasierte, mehrschichtige, dreidimensionale Lebensmittelverpackung nach einem der vorstehenden Ansprüche, wobei die zellulosebasierte, mehrschichtige, dreidimensionale Lebensmittelverpackung mit dem Papierstrom recycelbar ist.

9. Zellulosebasierte, mehrschichtige, dreidimensionale Lebensmittelverpackung nach einem der vorstehenden Ansprüche, wobei die zellulosebasierte, mehrschichtige, dreidimensionale Lebensmittelverpackung biologisch abbaubar ist.

10. Zellulosebasierte, mehrschichtige, dreidimensionale Lebensmittelverpackung nach einem der vorstehenden Ansprüche, wobei die Verpackung ausgewählt ist aus der Gruppe bestehend aus Primärverpackung, Sekundärverpackung und Tertiärverpackung.

11. Zellulosebasierte, mehrschichtige, dreidimensionale Lebensmittelverpackung nach einem der vorstehenden Ansprüche, wobei die Verpackung ausgewählt ist aus der Gruppe bestehend aus Bechern, Flaschen, Schalen, Kapseln, Löffeln, Spitzen und Deckeln.

12. Zellulosebasierte, mehrschichtige, dreidimensionale Lebensmittelverpackung nach einem der vorstehenden Ansprüche, wobei die zellulosebasierte, mehrschichtige, dreidimensionale Lebensmittelverpackung eine Lebensmittelschale, beispielsweise eine Lebensmittelschale für Tiefkühlkost ist.

13. Verfahren zum Herstellen einer zellulosebasierten, mehrschichtigen, dreidimensionalen Lebensmittelverpackung nach einem der vorstehenden Ansprüche, umfassend die Schritte
- Bereitstellen einer geformten Zelluloseschicht in einer Vakuum-Laminiervorrichtung mit einer perforierten Oberfläche unterhalb der geformten Zelluloseschicht und einem Heizelement auf der Oberseite der geformten Zelluloseschicht,
- Bereitstellen einer Barrierepapierschicht auf der Oberseite der geformten Zelluloseschicht und unter dem Heizelement,
- Bereitstellen einer Biokunststoffschicht auf der Oberseite der Barrierepapierschicht und unterhalb des Heizelements und
- Anwenden von Hitze von oben und einem Vakuum von unten durch die perforierte Oberfläche, um die zellulosebasierte, mehrschichtige, dreidimensionale Lebensmittelverpackung auszubilden.

14. Verfahren nach Anspruch 13, wobei das Erhitzen mit einem Infrarot-Heizelement bei einer Temperatur in dem Bereich von etwa 100-250 °C ausgeführt wird.

15. Verfahren nach Anspruch 13 oder 14, wobei die Laminierung während einer Zeitspanne in dem Bereich von etwa 10-60 s, beispielsweise in dem Bereich von etwa 20-40 s ausgeführt wird.

## Revendications

1. Emballage alimentaire tridimensionnel multicouche à base de cellulose comprenant une couche de plastique, une couche de papier barrière et une couche de cellulose moulée, dans lequel l'emballage alimentaire tridimensionnel multicouche à base de cellulose a un taux de transmission d'oxygène (OTR) inférieur à 30 cc/m²/d (23 °C, 50 % HR) selon le procédé DIN 53338-5 et un taux de transmission de vapeur d'eau (WVTR) inférieur à 20 g/m²/d (38 °C, 90 %HR) selon le procédé ISO 2528

2. Emballage alimentaire tridimensionnel multicouche à base de cellulose selon la revendication 1, dans lequel l'emballage alimentaire tridimensionnel multicouche à base de cellulose comprend, de l'intérieur vers l'extérieur, une couche de plastique, une couche de papier barrière et une couche de cellulose moulée.

3. Emballage alimentaire tridimensionnel multicouche à base de cellulose selon l'une des revendications précédentes, dans lequel la couche de plastique est choisie dans le groupe constitué par les polymères biodégradables, par exemple, PHA, PLA, PBAT, PBS, PGA ou des combinaisons de ceux-ci et a une épaisseur dans la plage de 30 à 250 µm.

4. Emballage alimentaire tridimensionnel multicouche à base de cellulose selon l'une des revendications précédentes, dans lequel la couche de papier barrière est choisie dans le groupe constitué par le papier couché par dispersion, le papier couché par extrusion ou le papier à couche organique mince, ou des combinaisons de ceux-ci, et a un poids de base dans la plage de 15 à 120 g/m².

5. Emballage alimentaire tridimensionnel multicouche à base de cellulose selon l'une des revendications précédentes, dans lequel la couche de cellulose moulée est fabriquée à partir d'un matériau choisi dans le groupe constitué par la pâte mécanique, la pâte à papier recyclée, la pâte de bagasse, la pâte de plantes annuelles, la pâte de cellulose vierge, la pâte de cellulose raffinée, ou des combinaisons de celles-ci, et a un poids de base dans la plage de 100 à 800 g/m².

6. Emballage alimentaire tridimensionnel multicouche à base de cellulose selon l'une des revendications précédentes, dans lequel la couche de cellulose moulée est préparée par thermoformage de la cellulose moulée dans la forme tridimensionnelle souhaitée.

7. Emballage alimentaire tridimensionnel multicouche à base de cellulose selon l'une des revendications précédentes, dans lequel l'emballage alimentaire tridimensionnel multicouche à base de cellulose est fabriqué par un procédé de laminage sous vide de la peau.

8. Emballage alimentaire tridimensionnel multicouche à base de cellulose selon l'une des revendications précédentes, dans lequel l'emballage alimentaire tridimensionnel multicouche à base de cellulose est recyclable avec le flux de papier.

9. Emballage alimentaire tridimensionnel multicouche à base de cellulose selon l'une des revendications précédentes, dans lequel l'emballage alimentaire tridimensionnel multicouche à base de cellulose est biodégradable.

10. Emballage alimentaire tridimensionnel multicouche à base de cellulose selon l'une des revendications précédentes, dans lequel l'emballage est choisi dans le groupe constitué par l'emballage primaire, l'emballage secondaire et l'emballage tertiaire.

11. Emballage alimentaire multicouche tridimensionnel à base de cellulose selon l'une des revendications précédentes, dans lequel l'emballage est choisi dans le groupe constitué par les gobelets, les bouteilles, les barquettes, les capsules, les cuillères, les embouts et les couvercles.

12. Emballage alimentaire tridimensionnel multicouche à base de cellulose selon l'une des revendications précédentes, dans lequel l'emballage alimentaire tridimensionnel multicouche à base de cellulose est une barquette alimentaire, par exemple une barquette alimentaire pour aliments surgelés.

13. Procédé de fabrication d'un emballage alimentaire tridimensionnel multicouche à base de cellulose selon l'une des revendications précédentes comprenant les étapes consistant à
- fournir une couche de cellulose moulée dans un dispositif de laminage sous vide avec une surface perforée sous la couche de cellulose moulée et un élément chauffant sur la couche de cellulose moulée,
- fournir une couche de papier barrière sur la couche de cellulose moulée et sous l'élément chauffant,
- fournir une couche de bioplastique sur la couche de papier barrière et sous l'élément chauffant, et
- appliquer de la chaleur par le haut et un vide par le bas à travers la surface perforée pour former l'emballage alimentaire tridimensionnel multicouche à base de cellulose.

14. Procédé selon la revendication 13, dans lequel le chauffage est effectué à l'aide d'un élément chauffant infrarouge à une température dans la plage de 100 à 250 °C environ.

15. Procédé selon la revendication 13 ou 14, dans lequel le laminage est effectué pendant un laps de temps dans la plage de 10 à 60 s environ, par exemple dans la plage de 20 à 40 s environ.
